# EUROPÄISCHE PATENTSCHRIFT

(11) **EP 2 166 907 B1**
(45) Veröffentlichungstag und Bekanntmachung des Hinweises auf die Patenterteilung: **26.10.2011**
(21) Anmeldenummer: 08759879.3
(22) Anmeldetag: 21.05.2008
(51) Int. Cl.: A47J 43/044

(54) **KÜCHENMASCHINE UND VERFAHREN ZUM BETREIBEN EINER KÜCHENMASCHINE**
FOOD PROCESSOR AND METHOD FOR OPERATING A FOOD PROCESSOR
ROBOT DE CUISINE ET PROCÉDÉ POUR FAIRE FONCTIONNER UN ROBOT DE CUISINE

(30) Priorität: 13.06.2007 DE 102007027205
(43) Veröffentlichungstag der Anmeldung: 31.03.2010
(73) Patentinhaber: BSH Bosch und Siemens Hausgeräte GmbH, 81739 München (DE)
(72) Erfinder: GOLAVSEK, Samo, 3312 Prebold (SI); OGRIZEK, Darko, 3320 Velenje (SI); POGACAR, Toni, 3311 Sempeter (SI)
(86) Internationale Anmeldenummer: PCT/EP2008/056278
(87) Internationale Veröffentlichungsnummer: WO 2008/151911

(56) Entgegenhaltungen:
- DE-A1- 3 148 585
- GB-A- 2 297 922
- US-A- 2 891 745
- US-A- 4 070 711
- US-A1- 2004 001 387

## Beschreibung

### Hintergrund der Erfindung

Die vorliegende Erfindung betrifft eine Küchenmaschine mit einem Gehäuse mit einer hierzu schwenkbar gelagerten Einrichtung zum Halten eines externen Bearbeitungsgerätes gemäß dem Oberbegriff des Anspruchs 1. Sie betrifft außerdem ein Verfahren zum Betreiben einer Küchenmaschine, bei welchem an einer schwenkbaren Halteeinrichtung ein externes Bearbeitungsgerät gegenüber einem Zubereitungsbehälter in einer Arbeitsposition gehalten wird, gemäß dem Oberbegriff des Anspruchs **22.**

### Stand der Technik

Aus dem Stand der Technik sind Küchenmaschinen bekannt, an denen ein elektrisch betriebenes Küchengerät, wie etwa ein Mixer, temporär fixiert werden kann. Sie umfassen gewöhnlich eine Rührschüssel, in welcher beispielsweise Teigwaren zubereitet und insbesondere mittels des fixierten Mixers angerührt bzw. durchgeknetet werden können. Die Rührschüssel ist hierbei von der Küchenmaschine abnehmbar, so dass sie einerseits vielseitig verwendbar ist und andererseits leicht gesäubert werden kann. Um eine solche abnehmbare Rührschüssel auch gut an der Küchenmaschine platzieren oder von der Küchenmaschine problemlos abnehmen zu können, beispielsweise wenn bereits ein Mixer an der Küchenmaschine fixiert ist, dessen Rührwerkzeuge zudem in die Rührschüssel hineinragen, weisen die bekannten Küchenmaschinen einen schwenkbaren Haltearm auf, an welchem der Mixer schwenkbar gelagert ist. Mittels eines solchen schwenkbaren Haltearms ist es nunmehr möglich, einen an der Küchenmaschine befestigten Mixer von der Rührschüssel wegzuschwenken. Damit der Haltearm nicht unbeabsichtigt, beispielsweise während des Einsatzes des Mixers, von der Rührachüssel wegachwenkt, ist der schwenkbare Haltearm mittels einer Sperreinrichtung gesichert. Erst nach Lösen dieser Sperreinrichtung ist der Haltearm frei schwenkbar. Derartige Sperreinrichtungen sind von außen gut zugänglich, so dass sie manuell einfach betätigbar sind. Eine bekannte Küchenmaschine umfasst eine manuell zu betätigende Sperreinrichtung, die an einer einem Rührbehälter abgewandten Seite einer Küchenmaschinen und an einem schwenkbaren Haltearm vorgesehen ist. Die Sperreinrichtung stützt sich hierbei als biegbarer Kunststoffsteg an einem Gehäuse der Küchenmaschine ab und verhindert so eln unbeabslchtlgtes Schwenken des Haltearms. Wlrd der blegsame Steg der Sperrelnrichtung jedoch manuell auf die Küchenmaschine zu bewegt bzw. von außen In das Gehäuse der Küchenmaschine hinein, stützt sich der biegsame Steg nicht weiter an dem Gehäuse ab und der Haltearm der Küchenmaschine kann frei geschwenkt werden.

### Eine ähnliche Küchenmaschine ist auch in der US 2004/0001387 A1 offenbart.

### Der Erfindung zugrundeliegende Aufgabe

Derart freiliegende Sperreinrichtungen, bei denen insbesondere ein biegsamer Sperrsteg unmittelbar händisch zugänglich ist, können ein hohes Verletzungsrisiko in sich bergen, da Finger eines Benutzers beim manuellen Betätigen des blegsamen Sperrsteges und bei einem damit einhergehenden Schwenken des Haltearms ungewollt in einen Bereich eines Spaltes gelangen und dort zwischen dem weggebogenen Sperrsteg und dem Gehäuse gequetscht werden können.

Der Erfindung liegt die Aufgabe zugrunde, dieses Verletzungsrisiko durch derartige Sperreinrichtung zu reduzieren oder auszuschließen und hierzu weiterentwickelte insbesondere händisch zu betätigende Sperreinrichtungen an Küchenmaschinen bereitzustellen.

### Erfindungsgemäße Lösung

Zur Lösung der Aufgabe lehrt die vorliegende Erfindung eine Küchenmaschine mit einem Gehäuse mit den Merkmalen des Anspruchs 1. Sie lehrt außerdem ein Verfahren zum Betreiben einer Küchenmaschine mit den Merkmalen des Anspruchs **22.**

Dadurch, dass das verlagerbare Sperrelement einer Schwenksperre innerhalb des Gehäuses angeordnet ist, ist es für einen Benutzer nlcht mehr frei zugänglich, so dass die Gefahr ausgeschlossen werden kann, dass sich ein Benutzer beim Schwenken der Halteeinrichtung auf Grund des manuell betätigten und verlagerten Sperrelementes im Zusammenspiel mit dem Gehäuse verletzt.

Indem das Sperrelement bei dem erfindungsgemäßen Verfahren von einem Betätigungelement bewegt wird, kann vorteilhafter Weise vermieden werden, dass das verlagerbare Sperrelement unmittelbar händisch berührt werden muss. Darüber hinaus kann mittels der Bewegungsrichtungsänderung bewirkt werden, dass Betätigungskräfte zum Verlagern des verlagerbaren Sperrelements wesentlich geringer ausfallen müssen, als dies der Fall ist, wenn Betätigungskräfte zum Verlagern des verlagerbaren Sperrelements unmittelbar händisch in das verlagerbare Sperrelement eingeleitet werden.

Der Begriff "schwenkbar gelagerte Halteeinrichtung" beschreibt vorliegend jegliche Einrichtung, die dazu vorgesehen ist, ein externes Bearbeitungsgerät an der Küchenmaschine zu fixieren und zumindest temporär zu halten, wobei es in diesem Zusammenhang keine Rolle spielt, ob es sich bei dem externen Bearbeitungsgerät um ein manuell angetriebenes oder elektrisch angetriebenes Küchengerät handelt.

Der Begriff "Schwenksperre" beschreibt vorliegend jegliche Einrichtung, die dazu geeignet ist, die schwenkbar gelagerte Halteeinrichtung gegen ein unbeabsichtigtes Schwenken gegenüber dem Gehäuse der Küchenmaschine zu sichern. Es versteht sich, dass derartige Schwenksperren vielseitig ausgestaltet sein können. Die vorliegende Schwenksperre ist vorzugsweise händisch zu betätigen, so dass sie einerseits baulich einfach und damit kostengünstig bereitgestellt werden kann und dass sie andererseits ohne elektrische Energie betriebsbereit ist. Somit handelt es sich bei dem verlagerbaren Sperrelement der hier zugrundeliegenden Schwenksperre um ein händisch zu verlagerndes Sperrelement, wodurch sich vorliegende Schwenksperre etwa von elektrisch betriebenen Schwenksperren grundlegend unterscheidet.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

Eine bevorzugte Ausführung der Erfindung sieht weiter vor, dass das verlagerbare Sperrelement von einer Gehäusewandung dauerhaft verdeckt angeordnet ist. Mit dieser Ausführung der Erfindung ist erreichbar, dass das Sperrelement unzugänglich für einen Benutzer der Küchenmaschine platziert ist. Hierdurch kann vermieden werden, dass der Bediener unmittelbar mit dem verlagerbaren Sperrelement In Kontakt kommt und sich hierdurch beim Betätigen des verlagerbaren Sperrelementes wie vorstehend beschrieben gegebenenfalls verletzt.

Baulich besonders einfach ist das verlagerbare Sperrelement der Schwenksperre gebildet, wenn das verlagerbare Sperrelement **erfindunasgemäß** einen elastisch biegbaren Steg umfasst. Beispielsweise ist ein solcher elastisch biegbarer Steg einstückig mit der Halteeinrichtung ausgebildet, so dass der elastisch biegbare Steg etwa in einem Spritzguss- bzw. Druckgussverfahren zusammen mit einem Grundkörper der Halteeinrichtung hergestellt werden kann. Eine Schwenksperre ist in ihrer Gesamtheit baulich besonders einfach bereitgestellt, wenn sich das verlagerbare Sperrelement zum Sperren des Haltearms an dem Gehäuse der Küchenmaschine, insbesondere an einem feststehenden Sperrelement der Schwenksperre, abstützt. Es versteht sich, dass ein derartiges feststehendes Sperrelement vielfältig ausgebildet sein kann. Besonders einfach ist es realisiert, wenn es ein Bestandteil des Gehäuses ist. Beispielsweise kann das feststehende Sperrelement als eine Erhebung in Form einer Nase der Gehäusewandung gebildet sein.

Damit das verlagerbare Sperrelement gut mit dem feststehenden Sperrelement zusammen wirken kann, ist es vorteilhaft, wenn die Schwenksperre ein feststehendes Sperrelement umfasst, welches innerhalb des Gehäuses angeordnet ist. Um beim Schwenken des Haltearms eine problemlose und ungehinderte Relativbewegung zwischen dem verlagerbaren Sperrelement und dem Gehäuse der Küchenmaschine zu gewährleisten, ist es vorteilhaft, wenn das feststehende Sperrelement beabstandet zu einer Gehäusewandung an dem Gehäuse angeordnet ist. Hierdurch kann das verlagerbare Sperrelement entfernt von der Gehäusewandung innerhalb des Gehäuses angeordnet sein, wodurch das verlagerbare Sperrelement beim Schwenken der Halteeinrichtung nicht in Kontakt mit dem Gehäuse der Küchenmaschine kommt.

Weiter ist das feststehende Sperrelement idealerweise einstückig mit einem Grundkörper der Küchenmaschine ausgebildet, sodass auch das feststehende Sperrelement in einem Spritzguss- bzw. Druckgussverfahren zusammen mit dem Grundkörper der Küchenmaschine hergestellt werden kann. Somit ist das feststehende Sperrelement auch als ein Bestandteil des Gehäuses anzusehen, so dass sich das verlagerbare Sperrelement selbst bei einem von der Gehäusewandung beabstandeten feststehenden Sperrelement an dem Gehäuse der Küchenmaschine abstützt.

Die Aufgabe der Erfindung wird auch von einer Küchenmaschine insbesondere mit einem Gehäuse, mit einer hierzu schwenkbar gelagerten Halteeinrichtung für ein externes Bearbeitungsgerät und mit einer Schwenksperre für die Halteeinrichtung gelöst, bei welcher die Schwenksperre eine Betätigung umfasst. Mittels einer derartigen Betätigung braucht der Benutzer der Küchenmaschine, wie vorstehend erläutert, nicht unmittelbar mit manuell zu betätigenden Sperrelementen der Schwenksperre in Kontakt zu treten. Hierdurch kann vermieden werden, dass der Benutzer beim Schwenken der Halteeinrichtung ein Sperrelement manuell gedrückt halten muss, das sich beim Schwenken zudem relativ zu ortsfesten Bauteilen der Küchenmaschine bewegt. Vorteilhafter Weise bewegt sich die Betätigung beim Schwenken der Halteeinrichtung nicht oder nur unwesentlich gegenüber dem Gehäuse.

Mit der hier beschriebenen Betätigung werden darüber hinaus vorteilhafter Weise keinerlei Sperrkräfte übertragen, so dass die Betätigung im Wesentlichen sperrkräfteneutral an der Küchenmaschine befestigt ist. Somit wirken im Wesentlichen lediglich nur manuell eingeleitete Betätigungskräfte auf die Betätigung, die mittels der Betätigung in die Schwenksperre eingeleitet werden. Weiter sieht eine bevorzugte Ausführungsvariante vor, dass die Betätigung von Sperrelementen der Schwenksperre verschieden ist. So kann gewährleistet werden, dass die Betätigung selbst keine Sperrkräfte aufnehmen muss, wodurch die Betätigung bereits mit geringem Krafteinsatz betätigbar sein kann. Ist die Betätigung an einer Führung gelagert, welche an dem Gehäuse angeordnet ist, ist die Betätigung vorteilhaft in die Küchenmaschine integriert und somit an der Küchenmaschine auch betriebssicher platziert. Es versteht sich, dass die Betätigung mittels einer Führung vielseitig an dem Gehäuse der Küchenmaschine gelagert sein kann. Ist die Betätigung an der Führung linear bewegbar geführt, kann die Führung baulich besonders einfach gestaltet werden. Idealerweise ist die Führung der Betätigung gemeinsam mit dem Gehäuse bzw. mit der Gehäusewandung der Küchenmaschine in einem Spritzguss- bzw. Druckgussverfahren herstellbar.

Um das verlagerbare Sperrelement bereits mit geringen Betätigungskräften verlagern zu können, ist es vorteilhaft, wenn die Betätigung das verlagerbare Sperrelement, vorzugsweise in einem Bereich eines zu verlagernden Endes des Sperrelementes, tangieren kann. Idealerweise tangiert die Betätigung das verlagerbare Sperrelement an einem freien Ende, welches dem Ende des verlagerbaren Sperrelementes gegenüberliegt, das einen Übergang zu dem Grundkörper des Haltearms bildet. Somit kann die gesamte Länge des verlagerbaren Sperrelementes als Biegeelement genutzt werden. Beispielsweise ist ein Teil der Betätigung vor einem Ende des verlagerbaren Sperrelementes und quer zu dem verlagerbaren Sperrelement angeordnet. Zumindest wenn die Betätigung betätigt wird, tangiert diese das verlagerbare Sperrelement idealerweise an dem zu verlagernden Ende des Sperrelements, so dass die in die Betätigung eingeleiteten Betätigungskräfte auf das verlagerbare Sperrelement wirken und hierdurch das verlagerbare Sperrelement gegenüber dem feststehenden Sperrelement derart ausgelenkt und verlagert wird, dass die Schwenksperre entsperrt und die Halteeinrichtung verschwenkt werden kann.

In einer bevorzugten Ausführung der Erfindung ist die Betätigung so auszubilden, dass sie auf die Geometrie der Schwenksperre bzw. des verlagerbaren Sperrelements wirken kann, um die Betätigungskräfte möglichst gering zu halten. So sieht eine bevorzugte Ausführungsvariante vor, dass die Betätigung einen Nocken mit einer Anlage für das verlagerbare Sperrelement, vorzugsweise für ein Ende des verlagerbaren Sperrelements, aufweist. Je nach Ausführung des Nockens, kann das Übersetzungsverhältnis zwischen Betätigung und verlagerbaren Sperrelement variiert bzw. optimiert werden. Der Begriff "Anlage" beschreibt denjenigen Bereich der Betätigung bzw. des Nockens, der unmittelbar mit dem verlagerbaren Sperrelement in Kontakt tritt. Beispielsweise kann diese Anlage dahingehend besonders ausgeführt sein, dass sie etwa härter ausgebildet ist als übrige Bereiche der Betätigung. Hierdurch wäre die Lebensdauer stark erhöht. Oder die Anlage weist eine geringere Rauigkeit auf, wodurch die Betätigung an dem verlagerbaren Sperrelement wesentlich besser gleiten kann.

Eine Ausführungsvariante sieht vor, dass die Betätigung mit der Anlage ein zu verlagerndes Ende des verlagerbaren Sperrelements tangieren kann. Hierdurch kann die Gestalt des Nockens vorteilhaft auf das verlagerbare Sperrelement wirken. Weist die Betätigung mittels des Nockens eine Querschnittsveränderung entlang ihrer Längserstreckung auf, kann die Betätigung konstruktiv besonders einfach an unterschiedlich ausgebildete verlagerbare Sperrelemente angepasst werden, ohne die Führung der Betätigung hierfür ändern zu müssen. Es versteht sich, dass mittels des Nockens insbesondere die Gestalt der Anlage beliebig modelliert werden kann, so dass mittels des Nockens verschiedenartigste Querschnittsveränderungen der Betätigung leicht realisiert werden können. Mittels des Begriffs "Nocken" ist vorliegend eine Erhebung der Betätigung beschrieben, welche die Oberflächengestalt der Betätigung vorgibt.

Es hat sich in der Praxis als vorteilhaft erwiesen, wenn die Anlage eine Sperrelementanlagefläche bereitstellt, welche gegenüber einer Längsachse der Betätigung eine stetige Steigung aufweist. Mittels einer derart stetig ausgebildeten Steigung der Anlage, insbesondere der Sperrelementanlagenfläche, gegenüber der Längsachse der Betätigung kann das verlagerbare Sperrelement bereits einfach und problemlos verlagert werden, wenn sich die Betätigung linear entlang des Sperrelementes bewegt.

Besonders vorteilhaft ist es, wenn eine Sperrelementanlagenfläche der Betätigung zu einer Längsachse der Betätigung in einem Winkel größer 5°, vorzugsweise in einem Winkel größer 10°, angeordnet ist. Bereits mit einem derart gewählten Winkel kann das verlagerbare Sperrelement gegenüber dem feststehenden Sperrelement ausreichend weit ausgelenkt werden. Andererseits hat es sich als vorteilhaft erwiesen, wenn eine Sperrelementanlagenfläche der Betätigung zu einer Längsachse der Betätigung in einem Winkel kleiner 90°, vorzugsweise in einem Winkel kleiner 45°, angeordnet ist. Mittels derart gewählter Winkel wird das verlagerbare Sperrelement bereits ausreichend ausgelenkt, selbst wenn der Betätigungsweg gering ist. Ein besonders gutes Verhältnis zwischen manuell aufzubringenden Betätigungskräften und einem Betätigungsweg der Betätigung ergibt sich, wenn die Sperrelementanlagenfläche in einem Winkel von 20° bis 25° zu der Längsachse der Betätigung angeordnet ist.

Die zuvor erwähnte Führung der Betätigung ist baulich besonders einfach umgesetzt, wenn die Betätigung an dem Gehäuse mittels eines Lineargleitlagers gelagert ist. Mittels des Lineargleitlagers ist die Betätigung an dem Gehäuse linear bewegbar geführt. Eine konstruktiv bevorzugte Ausführungsvariante sieht vor, dass das Lineargleitlager eine Gleitlagerbuchse aufweist, in welcher die Betätigung vorteilhaft linear geführt gelagert werden kann. Eine derartige Gleitlagerbuchse ist konstruktiv einfach bereitgestellt, wenn die Gleitlagerbuchse an dem Gehäuse angeordnet ist. Vorzugsweise ist die Gleitlagerbuchse einstückig mit dem Gehäuse ausgebildet.

Die gesamte Schwenksperre insbesondere mit einer Betätigung baut innerhalb des Gehäuses besonders kompakt, wenn die Gleitlagerbuchse das feststehende Sperrelement durchdringt. Hierdurch kann baulich besonders einfach erzielt werden, dass die Gleitlagerbuchse quer zu den verlagerbaren Sperrelementen platziert ist, so dass die Betätigung das verlagerbare Sperrelement problemlos tangieren kann. Umfasst die Betätigung einen Gleitlagerzapfen, welcher in einer Gleitlagerbuchse linear bewegbar geführt ist, ist die Betätigung vorteilhaft und betriebssicher an einer Führung linear bewegbar geführt. Um die Betätigung händisch leicht bedienen zu können, ist es vorteilhaft, wenn die Betätigung einen Betätigungshebel aufweist, welcher das Gehäuse durchdringt.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: schematisch eine Ansicht einer Küchenmaschine mit einer schwenkbaren Halteeinrichtung für externe Bearbeitungsgeräte;
- Fig. 2:: schematisch eine teilweise geschnittene Detailansicht einer Sperrposition einer Schwenksperre der schwenkbaren Halteeinrichtung der Küchenmaschine aus Fig. 1; und
- Fig. 3:: schematisch eine weitere teilweise geschnittene Detailansicht der Schwenksperre aus der Fig. 2 mit einem gegenüber einem feststehenden Sperrelement ausgelenkten verlagerbaren Sperrelement.

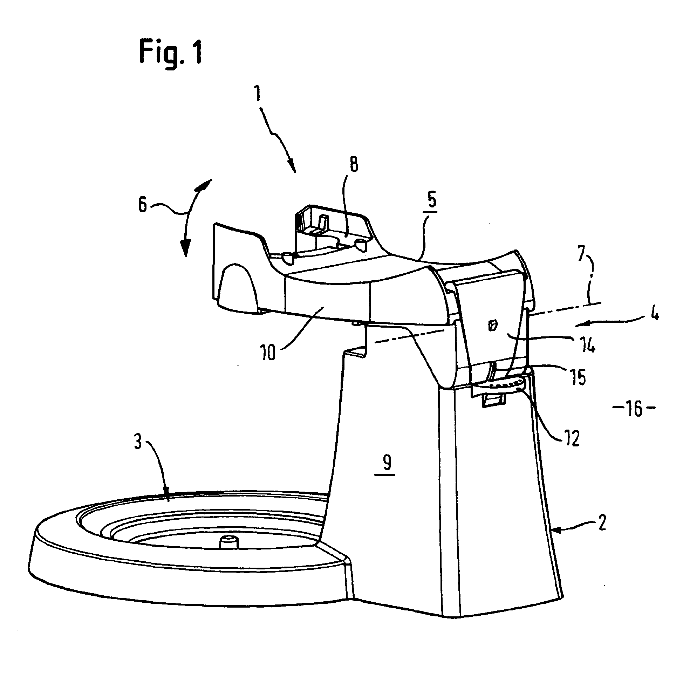

Die in den Fig. 1 bis 3 gezeigte Küchenmaschine 1 umfasst ein Standteil 2 mit einer Aufnahme 3 für einen hier nicht weiter gezeigten Rührbehälter. Im oberen Bereich 4 der Küchenmaschine 1 ist eine Haltekonsole 5 schwenkbar an dem Standteil 2 gelagert. Und zwar ist die Haltekonsole 5 derart an dem Standteil 2 der Küchenmaschine 1 gelagert, dass sie gemäß der Schwenkbewegung 6 um die Schwenkachse 7 schwenkbar ist. Mittels der Haltekonsole 5 kann ein externes Küchengerät (hier nicht dargestellt) im Bereich einer Küchengerätehalterung 8 oberhalb der Aufnahme 3 und damit oberhalb eines in die Aufnahme 3 eingesetzten Rührbehälters an der Haltekonsole 5 fixiert werden.

Um die Funktionssicherheit der Küchenmaschine 1 und um insbesondere ein Reinigen der Küchenmaschine 1 nach ihrem Gebrauch vorteilhaft zu gestalten, weist das Standteil 2 ein nahezu komplett geschlossenes Standteilgehäuse 9 und die Haltekonsole 5 einen im Wesentlichen geschlossenen Haltekonsolengrundkörper 10 auf. Der Haltekonsolengrundkörper 10 der Küchenmaschine 1 und das Standteilgehäuse 9 der Küchenmaschine 1 bilden zusammen ein Gesamtgehäuse der Küchenmaschine 1.

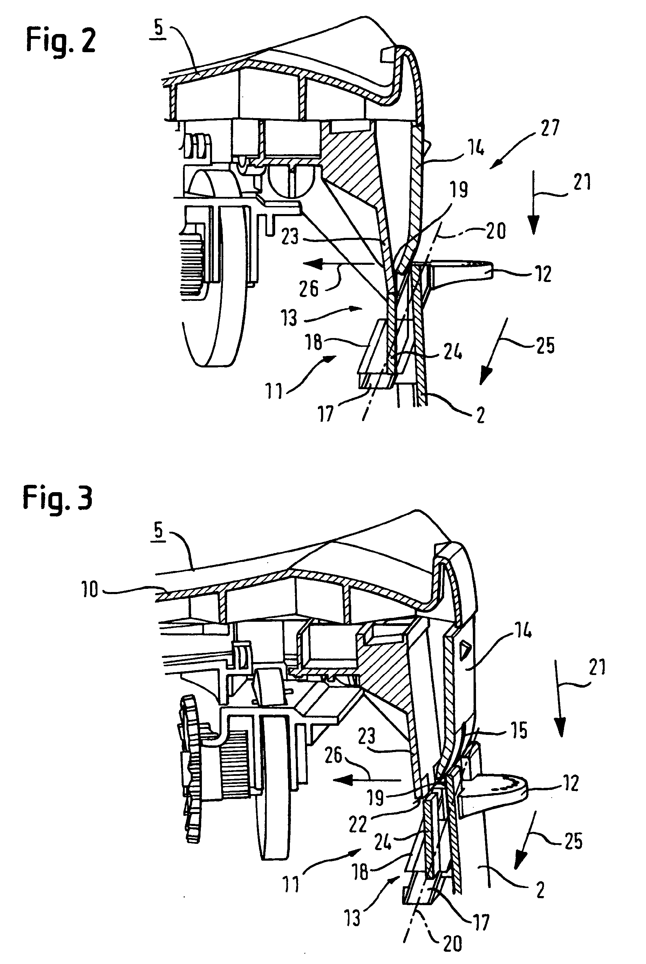

Damit die Haltekonsole 5 nicht unbeabsichtigt nach oben um die Schwenkachse 7 schwenkt, beispielsweise während ein Küchengerät (hier nicht dargestellt) Lebensmittel in der hier nicht weiter gezeigten Rührschüssel bearbeitet, verfügt die Küchenmaschine 1 über eine Schwenksperre 11 (siehe Figuren 2 und 3), die mittels eines Betätigungshebels 12 einer Betätigung 13 händisch entsperrt werden kann. Der Betätigungshebel 12 ragt hierbei insbesondere aus dem Standteilgehäuse 9 heraus, so dass die Betätigung 13 problemlos von außen zugänglich ist und manuell sehr gut betätigt werden kann.

Der Haltekonsolengrundkörper 10 umfasst im Bereich der Betätigung 13 bzw. des Betätigungshebels 12 eine zusätzliche Verkleidungspartie 14, die oberhalb des Betätigungshebels 12 eine Materialausnehmung 15 aufweist, so dass der Haltekonsolengrundkörper 10 bzw. die Verkleidungspartie 14 des Haltekonsolengrundkörpers 10 beim Schwenken der Haltekonsole 5 um die Schwenkachse 7 nicht mit dem Betätigungshebel 12 bzw. nicht mit weiteren Bereichen der Betätigung 13 kollidiert und hierdurch die Bewegungsfreiheit der Haltekonsole 5 hinsichtlich der Betätigung 13 nachteilig beeinflusst wird.

Vorteilhafter Weise ist die Schwenksperre 11 vollständig innerhalb der Küchenmaschine 1 angeordnet und wird insbesondere mittels des Standteilgehäuses 9, des Haltekonsolengrundkörpers 10 und der Verkleidungspartie 14 dauerhaft verdeckt und somit von der Umgebung 16 betriebssicher abgeschirmt. Vorteilhafter Weise ist die Schwenksperre 11 mittels des Betätigungshebels 12 betätigbar, ohne dass ein Benutzer der Küchenmaschine 1 während des Betätigens der Schwenksperre 11 direkt mit Bauteilen oder Bauteilgruppen der Schwenksperre 11 in Berührung kommt, welche relativ zu weiteren insbesondere ortsfesten Bauteilen der Küchenmaschine 1 bzw. der Schwenksperre 11 verlagert werden. Ein Betätigen der Schwenksperre 11 ist in diesem Ausführungsbeispiel mittels der Betätigung 13 betriebssicher gewährleistet, indem die Betätigung 13 zumindest teilweise als Gleitlagerzapfen 17 ausgebildet ist, welcher linear bewegbar in einer entsprechenden Gleitlagerbuchse 18 geführt ist. Die Gleitlagerbuchse 18 ist in diesem Ausführungsbeispiel einstückig mit dem Standteilgehäuse 9 ausgebildet und daher mit geringem Aufwand hergestellt.

Oberhalb des Gleitlagerzapfens 17 weist die Betätigung 13 eine Anlage 19 auf, die eine Querschnittsveränderung der Betätigung 13 entlang einer Betätigungslängsachse 20 bedingt. Es versteht sich, dass in anderen Ausgestaltungen der Erfindung die Anlage 19 etwa als Nocken der Betätigung 13 nicht wie in diesem Ausführungsbeispiel geradlinig ausgebildet sein kann, sondern eine Kurve bereitstellen kann, über welche die Betätigung 13 mit der Schwenksperre 11 korrespondiert.

Wird vorliegend der Betätigungshebel 12 gemäß Betätigungsrichtung 21 nach unten gedrückt, gleitet die Betätigung 13 mit ihrem Gleitlagerzapfen 17 innerhalb der Gleitlagerbuchse 18 in Richtung der Betätigungslängsachse 20, wobei die Anlage 19 ein unteres Ende 22 eines verlagerbaren Sperrelementes 23 der Schwenksperre 11 tangiert und hierbei das verlagerbare Sperrelement 23 derart auslenkt, dass es nicht mehr mit einem feststehenden Sperrelement 24 fluchtet, wie es in Fig. 2 gezeigt ist. Das verlagerbare Sperrelement wird zumindest mit seinem unteren Ende 22 ausgelenkt neben dem feststehenden Sperrelement 24 gehalten (siehe Fig. 3). Somit kann die Haltekonsole 5 gemäß der Schwenkbewegungen 6 um die Schwenkachse 7 (siehe Fig. 1) geschwenkt werden.

Das feststehende Sperrelement 24 ist beabstandet von dem Standteilgehäuse 9 innerhalb der Küchenmaschine 1 platziert, so dass das verlagerbare Sperrelement 23 im gesperrten Zustand der Schwenksperre 11 (siehe Fig. 2) problemlos oberhalb des feststehenden Sperrelements 24 ausgerichtet werden kann. Baulich besonders einfach ist das feststehende Sperrelement 24 bereitgestellt, wenn es an der Gleitlagerbuchse 18 befestigt ist und die Gleitlagerbuchse 18 bzw. die Betätigung 13 das feststehende Sperrelement 24 darüber hinaus durchdringt. Hierdurch kann das feststehende Sperrelement 24 in unmittelbarer Nähe der Betätigung 13 vorgesehen werden, wodurch die gesamte Schwenksperre 11 und die mit ihr korrespondierende Betätigung 13 sehr kompakt bauen. Das verlagerbare Sperrelement 23 ist vorteilhafter Weise als elastisch biegbarer Steg ausgebildet, der einstückig mit dem Haltekonsolengrundkörper 10 ausgebildet ist, so dass auch das verlagerbare Sperrelement 23 baulich relativ einfach realisiert ist.

Mittels der hier beschriebenen Betätigung 13 und der vorteilhaft ausgebildeten Schwenksperre 11 ist es mit sehr geringem Kraftaufwand und daher sehr komfortabel möglich, das verlagerbare Sperrelement 23 zu verlagern bzw. gegenüber dem feststehenden Sperrelement 24 auszulenken, indem die Betätigung 13 insbesondere ein Gleitlagerzapfen 17 der Betätigung 13 in eine erste Bewegungsrichtung 25 bewegt wird, wodurch das verlagerbare Sperrelement 23 in eine hiervon verschiedene weitere Bewegungsrichtung 26 bewegt und hierdurch das verlagerbare Sperrelement 23 aus einer Sperrposition 27 (siehe Fig. 2) heraus verlagert bzw. ausgelenkt wird.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Küchenmaschine (1) mit einem Gehäuse (9), mit einer hierzu schwenkbar gelagerten Einrichtung zum Halten (5) eines externen Bearbeitungsgerätes und mit einer Schwenksperre (11) für die Halteinrichtung (5), wobei die Schwenksperre (11) ein gegenüber dem Gehäuse (9) verlagerbares Sperrelement (23) umfasst, welches zum Sperren der Halteeinrichtung (5) mit dem Gehäuse (9) wechselwirkt, **wobei** das verlagerbare Sperrelement (23) Innerhalb des Gehäuses (9) angeordnet ist
**dadurch gekennzeichnet, dass das verlagerbare Sperrelement (23) einen elastisch biegbaren Steg umfasst.**

2. Küchenmaschine nach Anspruch 1, **dadurch gekennzeichnet, dass** das verlagerbare Sperrelement (23) von einer Gehäusewandung dauerhaft verdeckt angeordnet ist.

3. Küchenmaschine nach einem der Ansprüche 1 bis 3, **dadurch gekennzeichnet, dass** die Schwenksperre (11) ein feststehendes Sperrelement (24) umfasst, welches innerhalb des Gehäuses (9) angeordnet ist.

4. Küchenmaschine nach Anspruch 3, **dadurch gekennzeichnet, dass** das feststehende Sperrelement (24) beabstandet von einer Gehäusewandung an dem Gehäuse (9) angeordnet ist.

5. Küchenmaschine nach einem der Ansprüche **1 bis 4**, **dadurch gekennzeichnet, dass** die Schwenksperre (11) eine Betätigung (13) umfasst.

6. Küchenmaschine nach Anspruch **5**, **dadurch gekennzeichnet, dass** die Betätigung (13) von Sperrelementen (23, 24) der Schwenksperre (11) verschieden ist

7. Küchenmaschine nach Anspruch **5 oder 6**, **dadurch gekennzeichnet, dass** die Betätigung (13) an einer Führung gelagert ist, welche an dem Gehäuse (9) angeordnet ist.

8. Küchenmaschine nach einem der Ansprüche **5 bis 7**, **dadurch gekennzeichnet, dass** die Betätigung (13) an einer Führung linear bewegbar geführt ist.

9. Küchenmaschine nach einem der Ansprüche 5 **bis 8, dadurch gekennzeichnet, dass** die Betätigung (13) das verlagerbare Sperrelement (23), vorzugsweise In einem Berelch eines zu verlagernden Endes (22) des Sperrelementes (23), tangieren kann.

10. Küchenmaschine nach einem der Ansprüche **5 bis 9**, **dadurch gekennzeichnet, dass** die Betätigung (13) einen Nocken mit einer Anlage (19) für das verlagerbare Sperrelement (23), vorzugsweise für ein Ende (22) des verlagerbaren Sperrelementes (23), aufweist.

11. Küchenmaschine nach Anspruch **10, dadurch gekennzeichnet, dass** die Betätigung (13) mit der Anlage (19) ein zu verlagemdes Ende (22) des verlagerbaren Sperrelementes (23) tangieren kann.

12. Küchenmaschine nach Anspruch **10 oder 11, dadurch gekennzeichnet, dass** die Betätigung (13) mittels des Nockens eine Querschnittsveränderung entlang ihrer Längserstreckung aufweist.

13. Küchenmaschinen nach einem der Ansprüche **10 bis 12, dadurch gekennzeichnet, dass** die Anlage (19) eine Sperrelementanlagenfläche bereitstellt, welche gegenüber einer Längsachse (20) der Betätigung (13) eine stetige Steigung aufweist.

14. Küchenmaschine nach einem der Ansprüche **5 bis 13**, **dadurch gekennzeichnet, dass** eine Sperrelementanlagenfläche der Betätigung (13) zu einer Längsachse (20) der Betätigung (13) in einem Winkel größer 5°, vorzugsweise in einem Winkel größer 10°, angeordnet ist.

15. Küchenmaschine nach einem der Ansprüche **5 bis 14, dadurch gekennzeichnet, dass** eine Sperrelementanlagenfläche der Betätigung (13) zu einer Längsachse (20) der Betätigung (13) in einem Winkel kleiner 90°, vorzugsweise in einem Winkel kleiner 45°, angeordnet ist

16. Küchenmaschine nach einem der Ansprüche **6 bis 15**, **dadurch gekennzeichnet, dass** die Betätigung (13) an dem Gehäuse (9) mittels eines Lineargleülagers gelagert ist.

17. Küchenmaschine nach Anspruch **16, dadurch gekennzeichnet, dass** das Lineargleitlager eine Gleitlagerbuchse (18) aufweist.

18. Küchenmaschine nach Anspruch **17, dadurch gekennzeichnet, dass** die Gleitlagerbuchse (18) an dem Gehäuse (9) angeordnet ist.

19. Küchenmaschine nach Anspruch **17 oder 18**, **dadurch gekennzeichnet, dass** die Gleitlagerbuchse (18) das feststehende Sperrelement (24) durchdringt.

20. Küchenmaschine nach einem der Ansprüche **5 bis 19**, **dadurch gekennzeichnet, dass** die Betätigung (13) einen Gleitlagerzapfen (17) umfasst, welcher in einer Gleitlagerbuchse (18) linear bewegbar geführt ist.

21. Küchenmaschine nach einem der Ansprüche **5 bis 20**, **dadurch gekennzeichnet, dass** die Betätigung (13) einen Betätigungshebel (4) aufweist, welcher das Gehäuse (9) durchdringt.

22. Verfahren zum Betreiben einer Küchenmaschinen (1), bei welchem an einer schwenkbaren Halteeinrichtung (5) ein externes Bearbeitungsgerät gegenüber einem Zubereitungsbehälter In einer Arbeltsposition gehalten und die schwenkbare Halteeinrichtung (5) in der Arbeitsposition gegen ein unbeabslchtlgtes Schwenken gesperrt wird, und bei welchem zum Entsperren der schwenkbaren Halteeinrichtung (5) ein verilgerbares Sperrelement (23) aus einer Sperrposition (27) verlagert wird, **dadurch gekennzeichnet, dass** eine Betätigung (13) des verlagerbaren Sperrelementes (23) in eine erste Bewegungsrichtung (25) bewegt wird, wodurch das verlagerbare Sperrelement (23) in eine hiervon verschiedene weitere Bewegungsrichtung (26) bewegt und hierdurch das verlagerbare Sperrelement (23) aus der Sperrposition (27) verlagert wird, **wobei das Sperrelement (23) einen elastisch biegbaren Steg umfasst.**

## Claims

1. Food processor (1) with a housing (9), a device, which is mounted to be pivotable relative thereto, for mounting (5) an external operating apparatus and with a pivot lock (11) for the mounting device (5), wherein the pivotal lock (11) comprises a locking element (23) which is displaceable relative to the housing (9) and which cooperates with the housing (9) for locking the mounting device (5), wherein the displaceable locking element (23) is arranged within the housing (9), **characterised in that** the displaceable locking element (23) comprises a resiliently bendable web.

2. Food processor according to claim 1, **characterised in that** the displaceable locking element (23) is arranged to be permanently covered by a housing wall.

3. Food processor according to one of claims 1 and 2, **characterised in that** the pivot lock (11) comprises a stationary locking element (24) which is arranged within the housing (9).

4. Food processor according to claim 3, **characterised in that** the stationary locking element (24) is arranged at the housing (9) at a spacing from a housing wall.

5. Food processor according to any one of claims 1 to 4, **characterised in that** the pivot lock (11) comprises an actuating means (13).

6. Food processor according to claim 5, **characterised in that** the actuating means (13) is different from locking elements (23, 24) of the pivot lock (11).

7. Food processor according to claim 5 or 6, **characterised in that** the actuating means (13) is mounted on a guide arranged at the housing (9).

8. Food processor according to any one of claims 5 to 7, **characterised in that** the actuating means (13) is guided at a guide to be linearly movable.

9. Food processor according to any one of claims 5 to 8, **characterised in that** the actuating means (13) can contact the displaceable locking element (23), preferably in a region of an end (22), which is to be displaced, of the locking element (23).

10. Food processor according to any one of claims 5 to 9, **characterised in that** the actuating means (13) comprises a dog with a support (19) for the displaceable locking element (23), preferably for an end (22) of the displaceable locking element (23).

11. Food processor according to claim 10, **characterised in that** the actuating means (13) can contact an end (22), which is to be displaced, of the displaceable locking element (23) by the support (19).

12. Food processor according to claim 10 or 11, **characterised in that** the actuating means (13) has, by means of the dog, a change in cross-section along its length direction.

13. Food processor according to any one of claims 10 to 12, **characterised in that** the support (19) provides a locking element support surface which has a constant inclination relative to a longitudinal axis (20) of the actuating means (13).

14. Food processor according to any one of claims 5 to 13, **characterised in that** a locking element support surface of the actuating means (13) is arranged at an angle greater than 5°, preferably at an angle greater than 10°, relative to a longitudinal axis (20) of the actuating means (13).

15. Food processor according to any one of claims 5 to 14, **characterised in that** a locking element support surface of the actuating means (13) is arranged at an angle of less than 90°, preferably at an angle of less than 45°, relative to a longitudinal axis (20) of the actuating means (13).

16. Food processor according to any one of claims 5 to 15, **characterised in that** the actuating means (13) is mounted on the housing (9) by means of a linear slide bearing.

17. Food processor according to claim 16, **characterised in that** the linear slide bearing comprises a slide bearing bush (18).

18. Food processor according to claim 17, **characterised in that** the slide bearing bush (18) is arranged at the housing (9).

19. Food processor according to claim 17 or 18, **characterised in that** the slide bearing bush (18) penetrates the stationary locking element (24).

20. Food processor according to any one of claims 5 to 19, **characterised in that** the actuating means (13) comprises a slide bearing pin (17) guided in a slide bearing bush (18) to be linearly movable.

21. Food processor according to any one of claims 5 to 20, **characterised in that** the actuating means (13) comprises an actuating lever (4) which penetrates the housing (9).

22. Method of operating a food processor (1) in which an external operating apparatus is mounted on a pivotable mounting device (5) in an operating position relative to a preparation container and the pivotable mounting device (5) is locked in the working position against unintended pivotation, and in which for unlocking the pivotable mounting device (15) a displaceable locking element (23) is displaced out of a locking position (27), **characterised in that** an actuating means (13) of the displaceable locking element (23) is moved in a first movement direction (25) whereby the displaceable locking element (23) is moved in a further movement direction (26) different therefrom and the displaceable locking element (23) is thereby displaced out of the locking position (27), wherein the locking element (23) comprises a resiliently bendable web.

## Revendications

1. Robot ménager (1) comprenant un boîtier (9), comprenant un dispositif, logé de manière pivotante par rapport au boîtier, pour maintenir (5) un appareil de traitement externe et comprenant un dispositif de blocage de pivotement (11) pour le dispositif de maintien (5), le dispositif de blocage de pivotement (11) comprenant un élément de blocage (23) déplaçable par rapport au boîtier (9), lequel élément de blocage agit avec le boîtier (9) pour bloquer le dispositif de maintien (5), l'élément de blocage (23) déplaçable étant disposé à l'intérieur du boîtier (9), **caractérisé en ce que** l'élément de blocage (23) déplaçable comprend une languette élastiquement pliable.

2. Robot ménager selon la revendication 1, **caractérisé en ce que** l'élément de blocage (23) déplaçable est disposé de manière recouverte en permanence par une paroi de boîtier.

3. Robot ménager selon l'une quelconque des revendications 1 à 2, **caractérisé en ce que** le dispositif de blocage de pivotement (11) comprend un élément de blocage (24) stationnaire, lequel est disposé à l'intérieur du boîtier (9).

4. Robot ménager selon la revendication 3, **caractérisé en ce que** l'élément de blocage (24) stationnaire est disposé sur le boîtier à distance d'une paroi de boîtier.

5. Robot ménager selon l'une quelconque des revendications 1 à 4, **caractérisé en ce que** le dispositif de blocage de pivotement (11) comprend un dispositif d'actionnement (13).

6. Robot ménager selon la revendication 5, **caractérisé en ce que** le dispositif d'actionnement (13) est différent d'éléments de blocage (23, 24) du dispositif de blocage de pivotement (11).

7. Robot ménager selon la revendication 5 ou 6, **caractérisé en ce que** le dispositif d'actionnement (13) est logé sur un dispositif de guidage qui est disposé sur le boîtier (9).

8. Robot ménager selon l'une quelconque des revendications 5 à 7, **caractérisé en ce que** le dispositif d'actionnement (13) est guidé de manière déplaçable linéairement sur un dispositif de guidage.

9. Robot ménager selon l'une quelconque des revendications 5 à 8, **caractérisé en ce que** le dispositif d'actionnement (13) peut être tangent à l'élément de blocage (23) déplaçable, de préférence dans une zone d'une extrémité (22) à déplacer de l'élément de blocage (23).

10. Robot ménager selon l'une quelconque des revendications 5 à 9, **caractérisé en ce que** le dispositif d'actionnement (13) présente une came ayant une butée (19) pour l'élément de blocage (23) déplaçable, de préférence pour une extrémité (22) de l'élément de blocage (23) déplaçable.

11. Robot ménager selon la revendication 10, **caractérisé en ce que** le dispositif d'actionnement (13), avec la butée (19), peut être tangent à une extrémité (22) à déplacer de l'élément de blocage (23) déplaçable.

12. Robot ménager selon la revendication 10 ou 11, **caractérisé en ce que** le dispositif d'actionnement (13) présente au moyen de la came une modification de section transversale le long de son étendue longitudinale.

13. Robot ménager selon l'une quelconque des revendications 10 à 12, **caractérisé en ce que** la butée (19) fournit une surface de butée de l'élément de blocage, laquelle présente une pente continue par rapport à un axe longitudinal (20) du dispositif d'actionnement (13).

14. Robot ménager selon l'une quelconque des revendications 5 à 13, **caractérisé en ce qu'**une surface de butée de l'élément de blocage du dispositif d'actionnement (13) est disposée dans un angle supérieur à 5°, de préférence dans un angle supérieur à 10°, par rapport à un axe longitudinal (20) du dispositif d'actionnement (13).

15. Robot ménager selon l'une quelconque des revendications 5 à 14, **caractérisé en ce qu'**une surface de butée de l'élément de blocage du dispositif d'actionnement (13) est disposée dans un angle inférieur à 90°, de préférence dans un angle inférieur à 45°, par rapport à un axe longitudinal (20) du dispositif d'actionnement (13).

16. Robot ménager selon l'une quelconque des revendications 5 à 15, **caractérisé en ce que** le dispositif d'actionnement (13) est logé sur le boîtier (9) au moyen d'un palier lisse linéaire.

17. Robot ménager selon la revendication 16, **caractérisé en ce que** le palier lisse linéaire présente un coussinet (18) de palier lisse.

18. Robot ménager selon la revendication 17, **caractérisé en ce que** le coussinet (18) de palier lisse est disposé sur le boîtier (9).

19. Robot ménager selon la revendication 17 ou 18, **caractérisé en ce que** le coussinet (18) de palier lisse traverse l'élément de blocage (24) stationnaire.

20. Robot ménager selon l'une quelconque des revendications 5 à 19, **caractérisé en ce que** le dispositif d'actionnement (13) comprend un tourillon (17) de palier lisse, lequel est guidé de manière déplaçable linéairement dans un coussinet (18) de palier lisse.

21. Robot ménager selon l'une quelconque des revendications 5 à 20, **caractérisé en ce que** le dispositif d'actionnement (13) présente un levier de commande (4), lequel traverse le boîtier (9).

22. Procédé de fonctionnement d'un robot ménager (1), dans lequel un appareil de traitement externe est maintenu sur un dispositif de maintien (5) pivotant dans une position de travail par rapport à un réservoir de préparation et dans lequel le dispositif de maintien (5) pivotant, dans la position de travail, est bloqué contre un pivotement involontaire, et dans lequel pour débloquer le dispositif de maintien (5) pivotant, un élément de blocage (23) déplaçable est déplacé hors d'une position de blocage (27), **caractérisé en ce qu'**un dispositif d'actionnement (13) de l'élément de blocage (23) déplaçable est déplacé dans une première direction de déplacement (25), sur quoi l'élément de blocage (23) déplaçable est déplacé dans une autre direction de déplacement (26), différente de celle-là, et **en ce qu'**ainsi l'élément de blocage (23) déplaçable est déplacé hors de la position de blocage (27), l'élément de blocage (23) comprenant une languette élastiquement pliable.
